# EUROPEAN PATENT SPECIFICATION

(11) **EP 1 377 125 B1**
(45) Date of publication and mention of the grant of the patent: **25.08.2010**
(21) Application number: 02708727.9
(22) Date of filing: 29.03.2002
(51) Int. Cl.: H05B 6/10, B21B 45/00, C21D 1/42, C21D 9/60

(54) **HEAT INSULATING BOARD OF INDUCTION HEATING APPARATUS**
WÄRMEDÄMMUNGSTAFEL EINER INDUKTIONSHEIZVORRICHTUNG
PANNEAU THERMO-ISOLANT D'APPAREIL DE CHAUFFAGE PAR INDUCTION

(30) Priority: 30.03.2001 JP 2001098514
(43) Date of publication of application: 02.01.2004
(73) Proprietor: JFE Steel Corporation, Tokyo (JP); Toshiba Mitsubishi-Electric Industrial Systems Corporation, Minato-Ku Tokyo 108-0073 (JP)
(72) Inventor: AMAGASA, Toshiaki, Chiba Works, KAWASAKI STEEL CO., Chiba-shi, Chiba 260-0835 (JP); KATSURA, Shigefumi, Chiba Works, KAWASAKI STEELCO, Chiba-shi, Chiba 260-0835 (JP); EGUCHI, Toshinobu, Mitsubishi Denki K. Kaisha, Chiyoda-ku, Tokyo 100-8310 (JP)
(74) Representative: Grünecker, Kinkeldey, Stockmair & Schwanhäusser Anwaltssozietät
(86) International application number: PCT/JP2002/003178
(87) International publication number: WO 2002/080622

(56) References cited:
- WO-A-00/52965
- AU-B2- 717 883
- GB-A- 2 299 041
- JP-A- 6 231 774
- JP-A- 10 230 313
- JP-A- 11 251 049
- JP-A- 2000 319 721
- US-A- 3 735 082

## Description

### Technical Field

The present invention relates to an induction heating apparatus for a high temperature body applied to heat a slab (sheet bar) and the like obtained by being roughly rolled in a hot rolling line as one process for manufacturing, for example, a steel sheet and to a line including the induction heating apparatus.

### Background Art

When, for example, a steel slab is hot rolled, various troubles as described below are conventionally arisen particularly in a finish rolling process after rough rolling:
a) deterioration in quality of a temperature reduced portion of a slag at the leading end thereof caused by low speed rolling in a rough rolling mill;
b) deterioration in quality of a temperature reduced portion of a slab at the trailing end thereof caused by heat radiation until the beginning of finish rolling after the completion of rough rolling; and
c) deterioration in quality of a temperature reduced portion of the slab caused by an insufficient temperature increase in a portion thereof abutting against a skid beam in a heating furnace.

To solve the above problems, there has been proposed to perform temperature compensation by heating a sheet bar obtained by rough rolling using an induction heating apparatus in a transportation line at the inlet of a finish hot rolling mill.

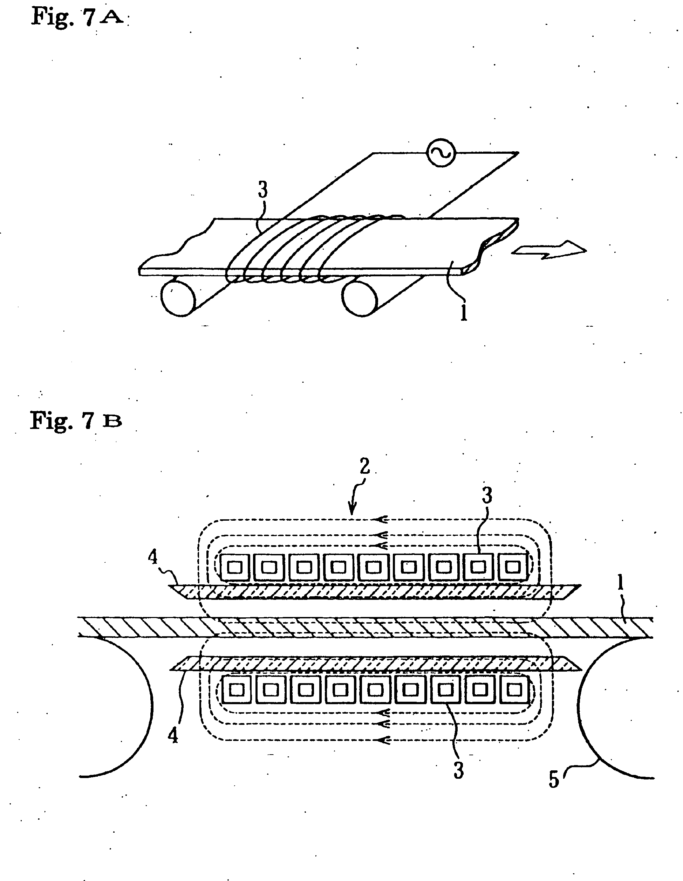

That is, as schematically shown in FIGS. 7A and 7B, the portion of a predetermined region of a sheet bar 1 as a to-be-heated material is enclosed in an induction heating coil 3 in its width and thickness directions before it is subjected to finish hot rolling, and alternate magnetic field, which passes through the sheet bar 1 entirely or partly in the longitudinal direction thereof, is applied from the induction heating coil 3 to the sheet bar 1, thereby the region of the sheet bar 1 is heated by an induction current induced in the sheet bar 1. Magnetic fluxes flowing in the induction heating coil 3 are shown by dotted lines in FIG. 7B, and the high frequency magnetic fluxes produced by the induction heating coil 3 pass through the sheet bar 1 in a rolling direction and flow to the back surface of the induction heating coil 3 through an end thereof so as to heat the interest portion of the sheet bar 1. Note that reference numeral 5 in the figure denotes rolls for transporting the sheet bar 1.

As described above, when the sheet bar 1 is heated making use of the induction current induced by the induction heating coil 3 of an induction heating apparatus 2, the induction heating coil 3 is liable to be burn out due to a high temperature of the induction heating coil 3 caused by the radiant heat of the sheet bar 1, which should be prevented. Thus, there has been proposed a method of installing heat resistant heat insulating boards 4 between the induction heating coil 2 and the sheet bar 1 to ease an increase in temperature in the vicinity of the induction heating coil by shielding the radiant heat of the sheet bar 1 as shown in FIG. 7B.

Japanese Examined Patent Application Publication No. 6-31682, for example, discloses a heat insulating board having a structure in which fire resistant inorganic fiber boards and heat resistant bricks are stacked in layers.

Document AU 717883 discloses another heat insulating board of the prior art.

### Disclosure of Invention

An object of the present invention is to provide a heat insulating board which is hardly deformed and broken by heat in a high temperature induction heating apparatus.

The present invention relates to a heat insulating board with the features of claim 1.

In the above invention, it is preferable that the monolithic refractory has a heat conductivity of 5W/(m°C) or more-.

Further, it is preferable that the cooling pipe is composed of a plurality of cooling pipes as well as the pipe axes of the cooling pipes are disposed in parallel with each other along a transporting direction of the heated material.

Further, it is preferable that the interval between the pipe axes of the adjacent ones of the cooling pipes is three times the thickness of the heat insulating board or less.

Another aspect of the present invention relates to an induction heating apparatus for a high temperature body having the heat insulating boards of the above invention inside of an induction heating coil. Further, in the induction heating apparatus for the high temperature body, it is possible that the length of each heat insulating board is 700 mm or more.

Still another aspect of the present invention relates to a hot rolling line having the induction heating apparatus for the high temperature body installed in a transportation line between the outlet of a rough rolling mill and the inlet of a finish rolling mill in a steel hot rolling line including a rough rolling mill and a finish rolling mill.

The various aspects and modes of the present invention will be understood in more detail by the further description thereof and the description of an example which are made referring to the drawings described below. Further, the present invent-ion is- by no means limited by the example.

### Brief Description of the Drawings

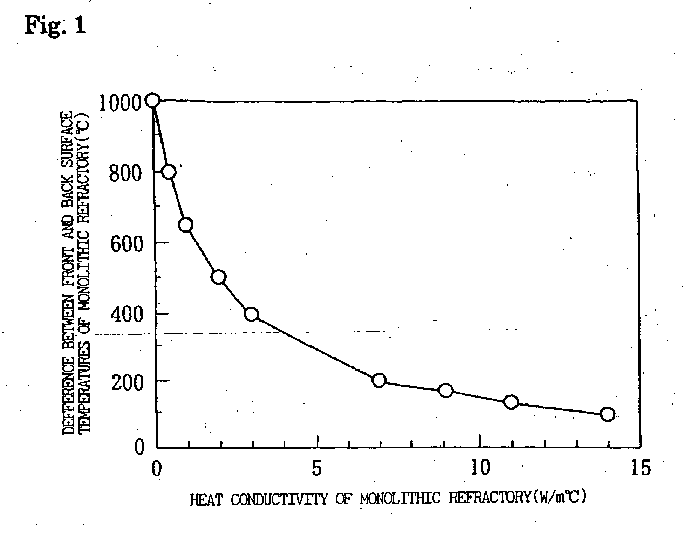

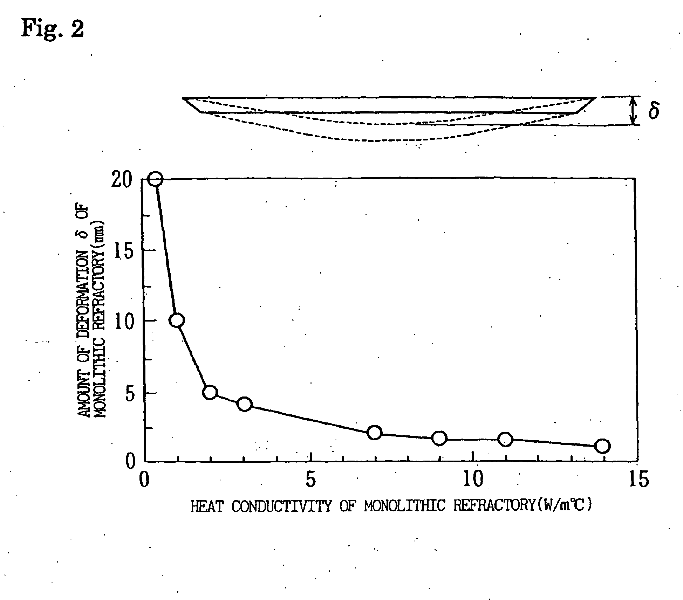

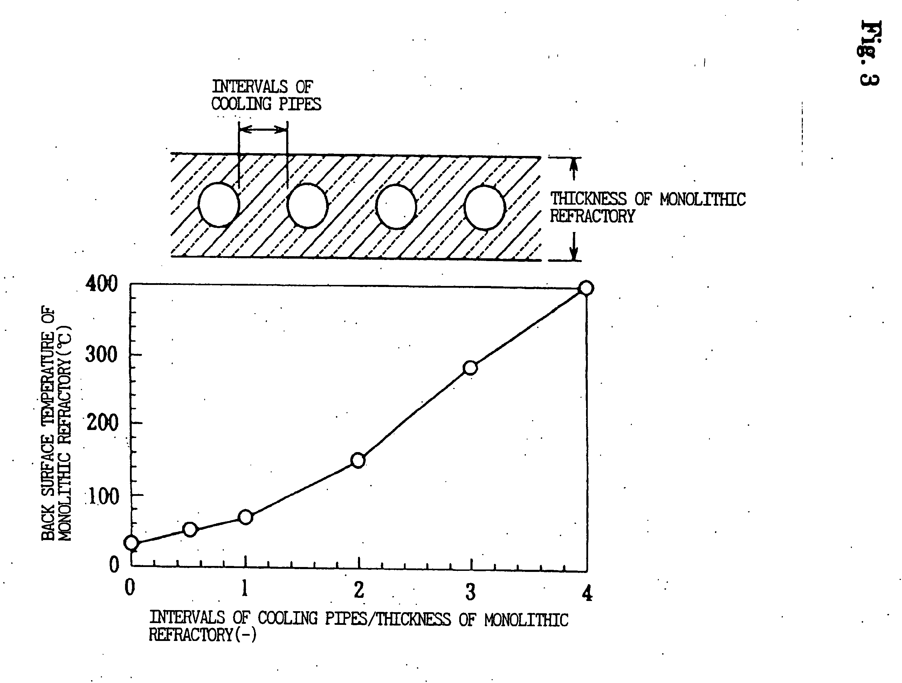

FIG. 1 is a graph showing an influence of the heat conductivity of a monolithic refractory over the difference between the front and back surface temperatures thereof, FIG. 2 is a graph showing an influence of the heat conductivity of the monolithic refractory on the amount of deformation thereof, and FIG. 3 is a graph showing a relationship between the back surface (that is, the surface of the monolithic refractory opposite to the surface thereof confronting a heated material) temperature of the monolithic refractory and the intervals of cooling pipes/the thickness of the monolithic refractory.

FIG. 4 is a view showing an example of piping of cooling pipes in a heat insulating board, and FIG. 5 is a view showing an example of attachment at both the ends of a cooling pipe.

FIG. 6 is a view showing an induction heating apparatus used in an embodiment.

FIGS. 7A and 7B are schematic views showing an outline of an induction heating method, and FIGS. 8A and 8B are schematic views showing a state of deformation caused to insulating boards for the induction heating apparatus.

### Best mode for Carrying out the Invention

The present invention will be described below together with the background of development thereof.

When a sheet bar is induction heated using an induction heating apparatus provided with long heat insulating boards composed of the material used in the above conventional art, the following problems will be newly arisen.

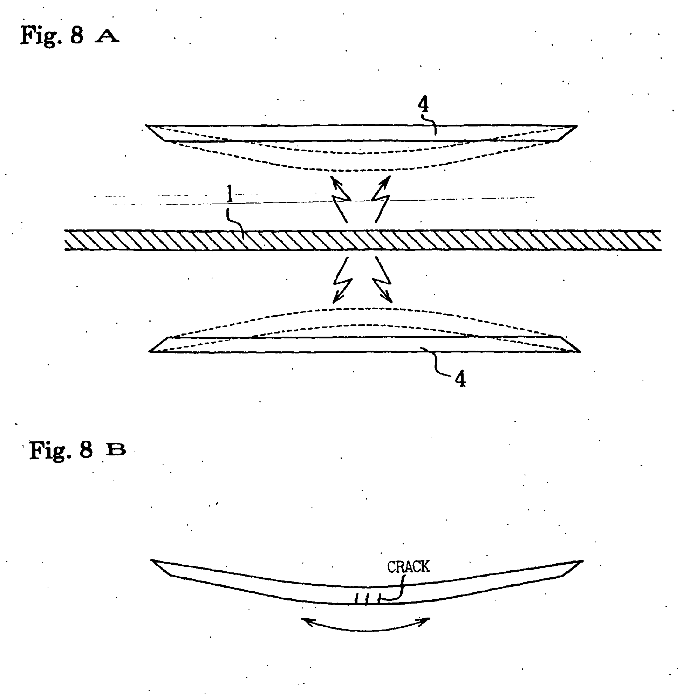

That is, the temperature of each heat insulating board, which is fixed and supported at both the ends thereof in a transporting direction, is increased by the radiant heat from the sheet bar 1 having a temperature of about 1000°C, and each heat insulating board 4 is curved and deformed so as to swell toward the sheet bar by the difference between the front and back surface temperatures thereof as shown by dotted lines in FIG. 8A. Then, when the heat insulating board 4 is deformed greatly, it may be cracked as shown in FIG. 8B, exfoliated, and fallen, and the heat insulating board 4 itself may be finally broken. It has been found that the tendency of deformation and breakage of the heat insulating board is a phenomenon that is more outstanding as the length of the heat insulating board is more increased in a transporting direction and as the length of the induction heating coil is more increased.

In the conventional induction heating apparatus, a short refractory material is used in the heat insulating boardy, and the length of the refractory material is ordinarily 300 mm to 500 mm and less than 700 mm. The occurrence of cracks as shown in FIG. 8 has not been experienced in the short heat insulating board.

The present invention is a novel proposal for solving the problems described above to which the conventional art cannot be applied and provides a heat insulating board for an induction heating apparatus which is hard to be deformed and broken by the radiant heat from a material subjected to induction heating.

To solve the above problems, the inventors made a study of conditions to be provided with a heat insulating board of an induction heating coil. As a result, the inventors have completed the present invention by finding that it is effective to compose the heat insulating board of a high heat conductive monolithic refractory and to embed cooling pipes in the refractory so that they are enclosed in the refractory to thereby positively extract the heat of the heat insulating board.

In the present invention, a heat insulating board is mainly composed of a monolithic refractory molded in a sheet shape. When the monolithic refractory is used, it can be easily molded when the pipes are enclosed thereby as in the present invention, and, moreover, the degree of intimate contact between the monolithic refractory and the pipes can be increased. Accordingly, heat is effectively extracted, thereby an increase in temperature of the refractory caused by radiant heat can be suppressed. Further, in the present invention, the monolithic refractory should have a high heat conductive property in order to effectively extract the heat from the heat insulating board by cooling.

FIG. 1 shows a result of an investigation made into an influence of the heat conductivity of a monolithic refractory over the difference between the front and back surface temperatures of the refractory when a monolithic refractory (thickness: 25mm, length in a transporting direction: 900mm) enclosing a cooling pipe was left in an enviroment of radiant heat from a sheet bar having a temperature of 1000 °C for one hour. As shown in FIG. 1, when an ordinary refractory material, being mainly composed of Al₂O₃ and SiO₂, that is, having a heat conductivity of 0.5 to 2.0W/m°C, is used, the difference between the front and back surface temperatures of the refractory reaches to 500 to 800°C. However, as the heat conductivity increases, the difference between the front and back surface temperatures abruptly decreases.

FIG. 2 shows a result of investigation as to the influence of the heat conductivity of the monolithic refractory over the amount of deformation δ thereof measured in the above experiment. It is found from FIG. 2 that the heat conductivity of the monolithic refractory remarkably influences the amount of bending deformation δ thereof. Then, the amount of deformation δ of the ordinary refractory material, which has the heat conductivity of 0.5 - 2.0W/m°C and is mainly composed of Al₂O₃ and SiO₂, is 5 to 20 mm.

According to the investigation of the inventors, it has been found that if the amount of deformation δ of the monolithic refractory is suppressed to 3 mm or less and preferably to 2 mm or less in the case of a relatively long heat insulating board having a length of 700 mm or more, the monolithic refractory sufficiently acts as a heat insulating board without being cracked and without causing any problem in practical use. That is, from FIG. 2, the amount of deformation δ of the monolithic refractory can be suppressed to a predetermined vale or less by using a highly heat conductive refractory having a heat conductivity of 5.0W/m°C or more and preferably 7.0W/m°C or more, for example, a monolithic refractory mainly composed of silicon carbide. In other words, this corresponds to the suppression of the difference between the front and back surface temperatures of the monolithic refractory to 300°C or less and preferably to 200°C, as is found from FIG. 1.

Further, to exert a cooling effect uniformly and sufficiently, it is preferable to compose the cooling pipe of a plurality of cooling pipes and to dispose them in parallel with each other with the axes of the pipes along a transporting direction.

The inventors further made an experiment as to the layout of the cooling pipes enclosed in the monolithic refractory. FIG. 3 shows the summary of a result of investigation as to the influence of the thickness of a highly heat conductive monolithic refractory having a thickness of 30 mm and a heat conductivity of 7 to 11W/m°C and the influence of the intervals of the cooling pipe which are defined in FIG. 3 over the back surface temperature thereof reached when the monolithic refractory was held while supplying water to the cooling pipes in the environment of radiant heat from the sheet bar having the temperature of 1000°C.

As shown in FIG. 3, it is found that the back surface temperature of the monolithic refractory can be put in order by the ratio of the intervals of the cooling pipes enclosed in the monolithic refractory to the thickness of the monolithic refractory and that it is preferable to set the above ratio, that is, the value of (intervals of cooling pipes)/(thickness of refractory) to 3 or less in order to reduce the back surface temperature of the refractory to 300°C or less that is the limit of heat resistant temperature of the induction heating coil.

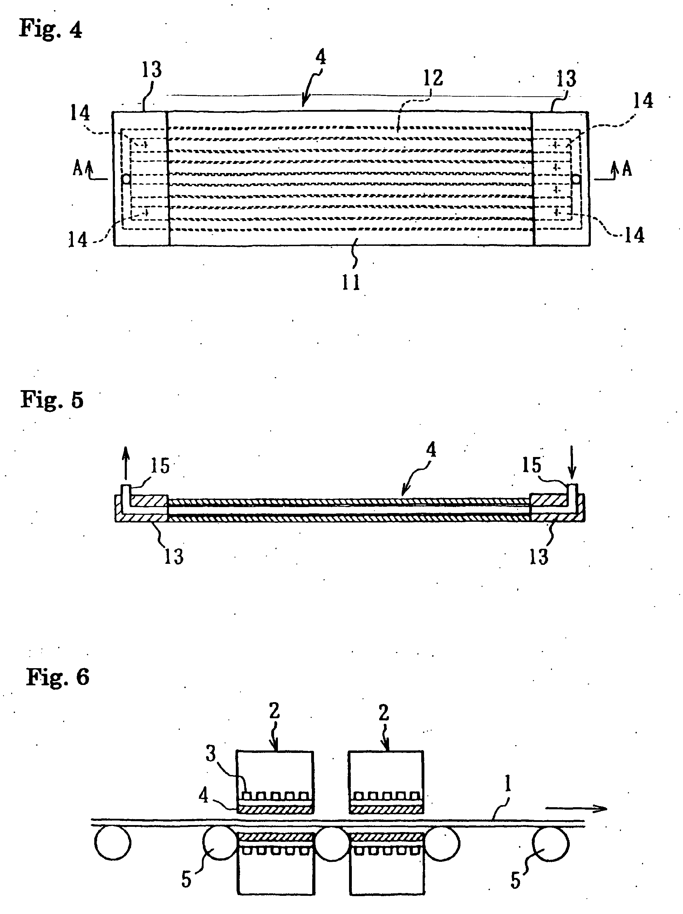

An example of a heat insulating board 4 having the conditions described above is shown by a plan view of FIG. 4 and a side elevational view (A-A cross section of FIG. 4) of FIG. 5. Cooling pipes 12, which are disposed substantially in parallel with each other in the transporting direction, are enclosed in a highly heat conductive monolithic refractory 11, and the monolithic refractory 11 is molded in a sheet-shape so that it is settled in edge mounting attachments 13. Water supply/discharge ports 15 are disposed at both the ends of the heat insulating board in a longitudinal direction at the center thereof in a width direction, as shown in FIG. 5. to pass a cooling medium (ordinarily, cooling water) through the cooling pipes. Thus, the cooling medium introduced from a water supply/discharge port 15 at one end is discharged from a water supply/discharge port 15 at the other end through the plurality of branched cooling pipes.

The heat insulating board made up as described above is secured to an induction heating apparatus 2 through bolt holes 14 formed, for example, at both the end thereof in a longitudinal direction and protects the induction heating coil 3 from the radiant heat from a heated material.

Note that since the cooling pipes 12 also have a role for supporting the monolithic refractory in the heat insulating board, there is a fear that the supporting strength of the cooling pipes is reduced because they are also induction heated while the sheet bar is being subjected to the induction heating. To suppress an increase in temperature of the cooling pipes, an induction current must be reduced. To reduce the induction current flowing in the cooling pipes, it is required to decrease the sectional area of the cooling pipes, that is, to reduce the diameter and wall thickness of the cooling pipes. However, the excessive emphasis of the above point on the one hand will reduce the strength (bending strength) of the cooling pipes, thereby the function of the cooling pipes as supporting members is deteriorated.

Accordingly, it is important to examine and select a proper size of the cooling pipes from both the viewpoints described above taking the length, material, and the like of the heat insulating board into consideration.

### [Example]

The present invention will be described below in detail. As shown in FIG. 6, two sets of induction heating apparatuses (internal width of coil: 2000 mm, internal height: 240 mm, and coil length: 600 mm) each having an internal-water-cooling type heat insulating board according to the present invention were installed in series at an interval of 1.2 m in a transporting direction in a transportation line between the outlet of a rough rolling mill and the inlet of a finish rolling mill. Each heat insulating board (length: 700 mm) was made up such that six stainless steel (SUS 304) cooling pipes (pipe diameter: 8 mm, pipe thickness: 1 mm) were disposed in parallel with each other in a width direction (direction perpendicular to the transporting direction) at intervals of 60 mm, and a castable refractory mainly composed of silicon carbide (SiC) was molded around the cooling pipes. The castable refractory (monolithic refractory) was 30 mm thick after they had been dried and baked, contained 70% silicon carbide (SiC) with the remaining components thereof being 20% alumina (Al2O3) and 10% silica (SiO2), and had a high heat conductive property with a heat conductivity of 9W/m°C.

A sheet bar 1 (width: 1300 mm, thickness: 30 mm, 0.5% Si steel), which had been rolled by the rough rolling mill, was passed through the transportation line by table rollers at a speed of 1 m/sec and heated through the application of an alternative magnetic field (input power: 5000 kW, frequency: 2000 Hz) in its longitudinal direction by the induction heating apparatuses. Next, the sheet bar having been heated was supplied to the subsequent finish rolling mill composed of seven stands and finish rolled to a thickness of 2 mm. Since a heating length was 2.4 m (2 × 0.6 m + 1.2 m) under the above conditions, when the sheet bar was passed at the speed of 1 m/sec, a heating time was calculated at 2.4 seconds in total. The sheet bar was subjected to induction heating under the above conditions, and the surface temperature of each heat insulating board and the degrees of deformation and damage thereof were observed. As a result, the coil side surface temperature of each heat insulating board was 150°C at the maximum. Further, the monolithic refractory was not deformed by the difference of front and back surface temperatures thereof, and no breakage was caused to the heat insulating boards.

While rolling was continually carried out for about six months under the above conditions, the heat insulating boards were neither deformed nor damaged during this period, thereby it was found that the heat insulating boards exerted a sufficient function. Then, it was confirmed that the induction heating coil was not damaged at all by the radiant heat from the sheet bar by providing the heat insulating boards of the present invention with the induction heating apparatus.

### Industrial Applicability

According to the present invention, the induction heating coil can be protected and prevented from damage by effectively shielding the radiant heat from a heated material such as a sheet bar, and the like having been subjected to induction heating. Thus, according to the present invention, induction heating can be stably executed in a transportation line, thereby the uniform quality of a rolled material and the improvement of productivity can be stably achieved.

## Claims

1. A heat insulating board (4) for an induction heating apparatus disposed inside of an induction heating coil for shielding the radiant heat from a heated material (1) transported through the induction heating coil comprising:
a high heat conductive monolithic refractory (11); and
a cooling pipe (12) enclosed in the monolithic refractory,
**characterized in that**,
said cooling pipe (12) is composed of a plurality of cooling pipes (12) and the pipe axes of the cooling pipes (12) are disposed in parallel with each other along a transporting direction of the heated material, wherein the interval between the pipe axes of the adjacent ones of the cooling pipes (12) disposed in parallel with each other is three times or less the thickness of the heat insulating board (4).

2. A heat insulating board (4) for an induction heating apparatus according to claim 1, wherein the monolithic refractory (11) has a heat conductivity of 5 W/(m°C) or more.

3. An induction heating apparatus for a high temperature body comprising a heat insulating board (4) according to claim 1 disposed inside of an induction heating coil.

4. A induction heating apparatus for a high temperature body according to claim 3, comprising a heat insulating board (4) having a length of 700 mm or more.

5. A steel hot rolling line having a rough rolling mill and a finish rolling mill, which comprises a induction heating apparatus according to claim 3 in a transportation line between an outlet of the rough rolling mill and the finish rolling mill.

## Patentansprüche

1. Eine wärmeisolierende Platte (4) für eine Induktionsheizvorrichtung, die innerhalb einer Induktionsheizspule zur Abschirmung von Strahlungswärme eines erhitzten Materials (1), das durch die Induktionsheizspule hindurch transportiert wird, angeordnet ist, umfassend:
ein hoch wärmeleitendes monolithisches Feuerfestmaterial (11); und
ein Kühlrohr (12), das in dem monolithischen Feuerfestmaterial eingeschlossen ist,
**dadurch gekennzeichnet, dass**
das Kühlrohr (12) aus einer Vielzahl von Kühlrohren (12) besteht und die Rohrachsen der Kühlrohre (12) parallel zueinander in einer Transportrichtung des erhitzten Materials angeordnet sind, wobei der Abstand zwischen den Rohrachsen benachbarter,
parallel zueinander angeordneter Kühlrohre (12), das Dreifache oder weniger der Dicke der wärmeisolierenden Platte (4) beträgt.

2. Eine wärmeisolierende Platte (4) für eine Induktionsheizvorrichtung nach Anspruch 1, wobei das monolithische Feuerfestmaterial (11) eine Wärmeleitfähigkeit von 5 W/(m°C) oder mehr aufweist.

3. Eine Induktionsheizvorrichtung für ein Hochtemperaturgehäuse, die eine wärmeisolierende Platte (4) nach Anspruch 1 umfasst, die innerhalb einer Induktionsheizspule angeordnet ist.

4. Eine Induktionsheizvorrichtung für ein Hochtemperaturgehäuse nach Anspruch 3, die eine wärmeisolierende Platte (4) mit einer Länge von 700 mm oder mehr aufweist.

5. Eine Warmwalzlinie mit einem Grob-Walzgerüst und einem Fertigwalzgerüst, die eine Induktionsheizvorrichtung nach Anspruch 3 in der Transportlinie zwischen einem Ausgang des Grob-Walzgerüstes und dem Fertigwalzgerüst aufweist.

## Revendications

1. Panneau d'isolation thermique (4) pour un appareil de chauffage par induction disposé à l'intérieur d'une bobine de chauffage par induction pour protéger de la chaleur rayonnante provenant d'une matière chauffée (1) transportée à travers la bobine de chauffage par induction, comprenant :
un réfractaire monolithique à haute conductivité thermique (11) ; et
un tuyau de refroidissement (12) enfermé dans le réfractaire monolithique,
**caractérisé en ce que**
ledit tuyau de refroidissement (12) est composé d'une pluralité de tuyaux de refroidissement (12) et les axes de tuyaux des tuyaux de refroidissement (12) sont disposés parallèlement les uns aux autres le long d'une direction de transport de la matière chauffée, dans lequel l'intervalle entre les axes de tuyaux des tuyaux de refroidissement adjacents (12) disposés parallèlement les uns aux autres est égal à trois fois ou moins de trois fois l'épaisseur du panneau d'isolation thermique (4).

2. Panneau d'isolation thermique (4) pour un appareil de chauffage par induction selon la revendication 1, dans lequel le réfractaire monolithique (11) a une conductivité thermique de 5 W/(m°C) ou plus.

3. Appareil de chauffage par induction pour un corps à température élevée comprenant un panneau d'isolation thermique (4) selon la revendication 1 disposé à l'intérieur d'une bobine de chauffage par induction.

4. Appareil de chauffage par induction pour un corps à température élevée selon la revendication 3, comprenant un panneau d'isolation thermique (4) ayant une longueur de 700 mm ou plus.

5. Ligne de laminage d'acier à chaud ayant un laminoir de dégrossissage et un laminoir de finition, laquelle comprend un appareil de chauffage par induction
selon la revendication 3 dans une ligne de transport entre une sortie du laminoir de dégrossissage et le laminoir de finition.
